Europäisches Patentamt

European Patent Office

Office européen des brevets

(11) Publication number: **0 168 656**
**B1**

## EUROPEAN PATENT SPECIFICATION

(45) Date of publication of patent specification: **17.08.88**

(51) Int. Cl.⁴: **F 04 B 21/00, F 16 K 24/04**

(21) Application number: **85107510.1**

(22) Date of filing: **18.06.85**

(54) **An automatic degassing device in a reciprocating pump.**

(30) Priority: **27.06.84 JP 132793/84**

(43) Date of publication of application:
**22.01.86 Bulletin 86/04**

(45) Publication of the grant of the patent:
**17.08.88 Bulletin 88/33**

(84) Designated Contracting States:
**CH DE FR GB IT LI NL**

(56) References cited:
**DE-A-3 040 478**
**FR-A-1 591 836**
**US-A-4 104 004**

(73) Proprietor: **Nikkiso Eiko Co., Ltd.**
**No. 27-10, 2-chome, Ebisu**
**Shibuya-ku Tokyo (JP)**

(72) Inventor: **Inoeu, Kouji**
**No. 12-1, 1-chome, Taira-cho**
**Meguro-ku Tokyo (JP)**

(74) Representative: **Müller, Hans-Jürgen, Dipl.-Ing.**
**et al**
**Müller, Schupfner & Gauger Lucile-Grahn-**
**Strasse 38 Postfach 80 13 69**
**D-8000 München 80 (DE)**

Courier Press, Leamington Spa, England.

## Description

This invention relates to an automatic degassing device in a reciprocating pump. More particularly, the invention relates to an automative degassing valve for suction of air in addition to liquid through a suction valve, or for pumping a volatile liquid capable of generating gas under a low pressure, in a general reciprocating pump having a piston, a plunger or a diaphragm as a reciprocating body.

There have been proposed several degassing mechanisms having special structures exclusively for degassing (for example, Japanese Patent Publication 12031/82), in which a valve activated by a spring is opened in an appropriate equilibrium condition of pressure for discharging only gases. Also FR—A—1 591 836 shows a pump with a degassing device.

Further, there is known another method in which a valve is operated manually in consideration of a gaseous state for discharging gases. In this method, however, an apparatus is complicated or a troublesome manual operation is needed.

When a gas is introduced into a pump chamber, a pumping function is considerably decreased due to compression of the gas. Especially in a small type of an electrically driven diaphragm pump, this phenomenon is significant thereby to prohibit an appropriate pumping action. This phenomenon is also regarded as a severe problem in common reciprocating pumps.

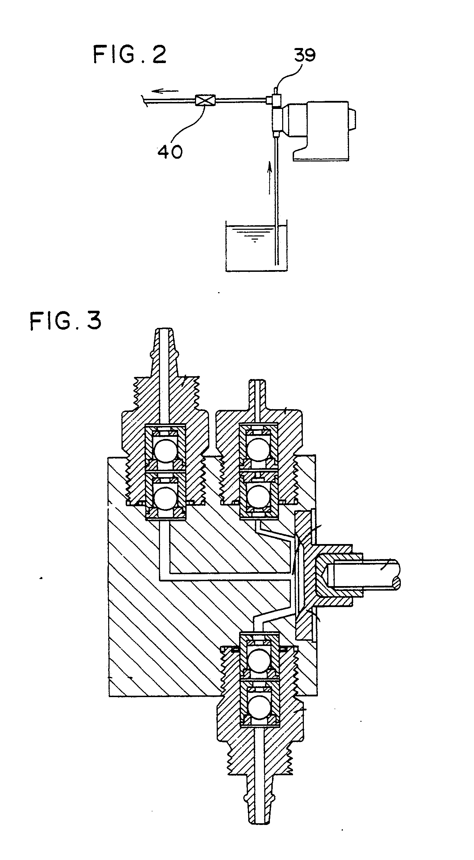

In order to solve the above problems, the applicant has developed a mechanism of very-simple and low cost for ensuring a pumping action of automatically discharging only the gases, and filed patent application therefore (Japnese Patent Application 103402/84; publication number 6—256 572 — published on 18.12.85). This mechanism is shown in Figure 3, in which the degassing action may be ensured but a liquid-contacting element is too large and thus uneconomical for a pump of lower compacity. Further, a larger space of delivery is needed, resulting in a considerably large pump chamber and reduction in a pumping efficiency.

In view of the foregoing, the inventors have developed a mechanism for automatically discharging gases introduced initially or during operation into a pump or subsequently evaporated from a liquid within the pump chamber, in which a delivery line of the reciprocating pump is provided with a branched passage having a degasing valve.

Accordingly, an object of the invention is to provide an automatic degassing device in a reciprocating pump without necessity of additional fabrication of the pump, but only by replacing a joint on a delivery side with a degassing valve cartridge.

In order to achieve the above object, the invention provides an automatic degassing device in a reciprocating pump having a reciprocating body, such as a piston or a diaphragm, and check valves for suction and delivery to provide a pumping function, in which a tubing directly behind a delivery valve is divided into branched passages for a discharged fluid and for a separated gas, in which a degassing valve is arranged in a passage directly upward, and in which a throttle valve means is arranged in the passage for the discharged fluid to generate a back pressure during the discharging operation.

The invention will now be described in more detail for better understanding with reference to the accompanying drawings.

Figure 1 is a sectional view of a liquid-contacting portion of a small diaphragm pump having a device according to the invention, in which non-essential parts for suction and delivery valves are omitted;

Figure 2 is a schematic diagram of the pump according to the invention, including a back pressure valve in a degassing mechanism; and

Figure 3 is a sectional view of an important portion of a pump according to the Japanese Patent application No. 103402/84.

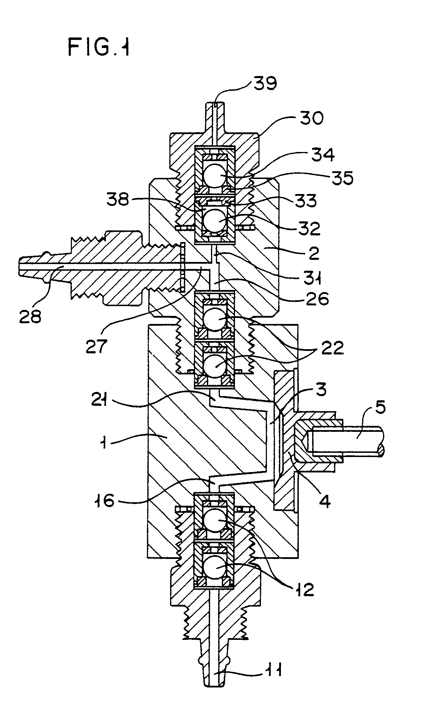

Figure 1 shows one embodiment of an automatic degassing device according to the invention, in which a two-step valve structure for each of suction and delivery valves is employed for improving its performance.

A liquid is introduced into an inlet 11 during a suction stroke and then through a two-step ball valve 12 and a suction line 16 in a liquid-contacting portion of the pump 1 into a pump chamber 3. A reference numeral 4 represents a diaphragm, while a reference 5 represents a piston rod. The liquid is then pumped during a delivery stroke from the pump chamber 3 through a delivery line 21 and a two-step ball valve 22 into a delivery passage 26, which at its outlet 28 is provided with a constricted back-pressure valve 40 (see Fig. 2) having at its lower end a somewhat constricting effect and producing a back pressure. Since an inner pressure in a delivery passage 27 leading to the ball 32 via a passage 31 branched from the delivery passage 26 is slightly increased by an action of the back-pressure valve 40, the gas having a higher specific volume than the liquid is urged into the passage 31. In order to enhance such action, the passage 31 is made narrower than the other branched delivery passage 27 (for example, less than $\frac{1}{2}$ of a diameter of the delivery passage 26).

A ball 32 made of a material having a lower specific gravity than the liquid (for example, the ball 32 of polypropylene (SG 0.9) for the liquid of SG 1 or water) is arranged in a valve chamber 38. When the chamber 38 is filled with the gas, the ball 32 is not subjected to a floating action and therefore falls down from the seat 33. The gas is thus discharged from a degassing hole 39 via a hole of the seat 33. When the gas is discharged and the chamber 38 becomes filled with the liquid, the ball 32 is urged against the seat 33 due to the floating action for sealing or preventing leakage of the liquid.

On the other hand, a ball 34 made of a heavier material is placed on a seat 35. Thus, the ball 34 is urged against the seat 35 for sealing upon a lower pressure of the liquid below an atmospheric pressure during a suction stroke, thereby preventing suction of air from a degassing hole 39.

The degassing procedure according to the invention may be summarized as follows.

1. When the gas present in the chamber 38, it is discharged in a delivery stroke through a gap between the ball 32 and the seat 33.

2. When the chamber 38 is filled with the liquid, the ball 32 is urged against the seat 33 due to floatation, thereby preventing leakage of the liquid.

3. When the delivery passage 26 is filled with the liquid during a suction stroke, the close contact of the ball 34 against the seat 35 prevents the air from flowing thereinto.

Thus, in accordance with the invention, the degassing valve device may discharge the gas prevent in the pump chamber during the delivery stroke and prevent the air suction dfuring the the suction stroke. When the pump is filled with the liquid, the device ensures the normal pumping function. In this case, a throttle valve is desirably arranged at a downstream from the delivery passage for providing a slight back-pressure to automatically discharge any gas in the pump through the degassing device. An experiment shows that the absence of the back-pressure valve 40 in Fig. 2 (namely application of a static pressure only) necessitates a considerably longer period of time for discharging the air which has been sucked through a suction inlet during the pumping operation, and that the complete degassing is impossible, resulting in reduction of the pumping efficiency. The back-pressure applied by a spring load in a constricting manner may be in the range of 0.8 to 1.0 Bar (kgf/cm$^2$), independent from a static head.

## Claims

1. An automatic degassing device in a reciprocating pump having a reciprocating body, such as a piston or a diaphragm (4), and check valves (12, 22) for suction and delivery to provide a pumpng function, characterized in that a tubing directly behind the delivery valve (22) is divided into a passage (27, 28) for a discharged fluid and a passage for a separated gas, in that a degassing valve is arranged in said passage (31, 39) for separated gas directing upward, and in that a throttle valve means (40, Fig. 2) is arranged in the passage for the discharged fluid to generate a back pressure during the discharging operation.

2. An automatic degassing device according to claim 1, wherein the degassing valve comprises a two-step ball valve in which a ball of a lower specific gravity than a pumping fluid is arranged at a lower step while a ball of a higher specific gravity than the pumping fluid is arranged at an upper step, said ball and seat at the upper step being identical to a conventional ball check valve structure and having a function of preventing air backflow during a suction stroke, while the ball at the lower step has a second seat directly thereabove for preventing fluid leakage during a delivery stroke.

## Patentansprüche

1. Automatische Entgasungsvorrichtung in einer Pumpe mit einem hin- und hergehenden Organ, z.B. einem Kolben oder einer Membran (4), und mit Absperrorganen (12, 22) für den Ansaug- und Förderbetrieb zur Bereitstellung einer Pumpenfunktion, dadurch gekennzeichnet, daß eine Leitung unmittlebar nach dem Förderventil (22) in einen Durchgang (27, 28) für Förderfluid und einen Durchgang für ein abgetrenntes Gas aufgeteilt ist, daß in dem nach oben verlaufenden Durchgang (31, 39) für abgetrenntes Gas ein Entgasungsventil angeordnet ist, und daß in dem Durchgang für das Förderfluid ein Drosselorgan (40, Fig. 2) zur Erzeugung eines Rückstaus während es Fördervorgangs angeordnet ist.

2. Automatische Entgasungsvorrichtung nach Anspruch 1, dadurch gekennzeichnet, daß das Entgasungsventil ein Zweistufen-Kugelventil ist, bei dem eine Kugel niedrigerer Dichte als ein Pumpfluid an einer unteren Stufe angeordnet ist, während eine Kugel höherer Dichte als das Pumpfluid an einer oberen Stufe angeordnet ist, wobei Kugel und Sitz an der oberen Stufe mit einer konventionellen Kugelventilkonstruktion identisch sind und eine Rückstrom von Luft während eines Saughubs verhindern, wogegen die Kugel an der unteren Stufe einen unmittelbar über ihr befindlichen zweiten Sitz hat, um einen Fluidaustritt während eines Förderhubs zu verhindern.

## Revendications

1. Dispositif de dégazage automatique dans une pompe à mouvement alternatif comportant un corps à déplacement alternatif, comme par exemple un piston ou un diaphragme (4), et des soupapes de retenue (12, 22) réalisées pour l'aspiration et le refoulement de manière à obtenir une fonction de pompage, caractérisé en ce qu'un conduit situé directement en aval de la soupape de refoulement (22) est subdivisé en un passage (27, 28) de circulation d'un fluide refoulé et en un passage de circulation d'un gaz séparé, en ce qu'une soupape de dégazage est disposée dans ledit passage (31, 39), qui s'étend vers le haut, de circulation du gaz séparé, et en ce que des moyens formant vanne-papillon (40, figure 2) sont disposés dans le passage de circulation du fluide refoulé pour produire une contre-pression pendant l'opération de refoulement.

2. Dispositif de dégazage automatique seon la revendication 1, dans lequel la soupape de dégazage comporte une soupape à billes à deux étages, dans lequel une bille possédant un poids spécifique inférieur à un fluide de pompage est disposée dans un étage inférieur, tandis qu'une bille possédant un poids spécifique supérieur au fluide de pompage est disposée dans un étage supérieur, ladite bille et ledit siège présents dans l'étage supérieur étant identiques à une structure classique de soupape de retenue à bille et ayant pour rôle d'empêcher un reflux de l'air pendant une course d'aspiration, tandis que la bille située dans l'étage inférieure possède un second siège situé directement au-dessus d'elle, de manière à empêcher une fuite de fluide pendant une course de refoulement.

FIG.1

FIG. 2

39

40

FIG. 3